Europäisches Patentamt

European Patent Office

Office européen des brevets

(19)

(11) Publication number: **0 065 047**
**A1**

## (12) EUROPEAN PATENT APPLICATION

(21) Application number: **81302223.3**

(22) Date of filing: **19.05.81**

(51) Int. Cl.³: **C 02 F 3/12, C 02 F 3/16**

(43) Date of publication of application: **24.11.82**
**Bulletin 82/47**

(84) Designated Contracting States: **AT BE CH DE FR GB IT LI NL SE**

(71) Applicant: **Rongved, Paul Ingolf, Notch Road, Oak Ridge New Jersey 07438 (US)**

(72) Inventor: **Rongved, Paul Ingolf, Notch Road, Oak Ridge New Jersey 07438 (US)**

(74) Representative: **Kearney, Kevin David Nicholas et al, KILBURN & STRODE 30 John Street, London, WC1N 2DD (GB)**

(54) **Waste water treatment system with aeration and circulating means.**

(57) A flowing liquid system (10) in which means are provided for simultaneously aerating and circulating the said liquid comprising surface aerator means (20) cooperating with partition means (18) extending into a communication section between a first channel (23) and a second channel (28) with the aerator means located on the second channel side of an separated from the partition means and closer to the partition means than to the outside of the communication section, the said system being particularly suited for use in an activated sludge waste water treatment system.

EP 0 065 047 A1

1.

## "WASTE WATER TREATMENT SYSTEM WITH AERATION AND CIRCULATING MEANS"

### TECHNICAL FIELD

The present invention relates to a flowing liquid system and more particularly to such a system provided with novel means for simultaneously aerating, mixing and circulating the liquid at predetermined rates for optimum process results.

The invention is hereinafter specifically described with respect to its preferred embodiment comprising an activated sludge waste water treatment system. It will, however, be understood that the fundamental features of this invention may be employed in other embodiments comprising liquid systems in which aerating and circulating means are utilized.

### BACKGROUND OF THE INVENTION

An effective activated sludge treatment process is one of the best and most widely used waste water treatment processes. It utilizes bacterial decomposition for the removal of organic matter in the waste water. After an initial screening or gravitational settling period has removed any large and/or heavy material in the waste water, such waste water is introduced into a process chamber or reservoir which is also called a reactor. There it is subjected to aeration (oxygenation) which causes a chemical and/or biological reaction to occur, whereby the colloidal material forms sludge flocs. Bacteria and other micro-organisms colonize such sludge flocs and grow and reproduce. The sludge flocs should remain suspended in the reactor but should settle readily in a clarifier (settling tank) from which all or a portion can be easily returned to the reservoir while purified water is drawn off. A sludge floc can typically achieve an average age of 30 to 40 days and carries strong, well-developed bacteria and micro-organisms which are active in converting the organic matter in the waste water into products which are environmentally harmless or easily precipitated or otherwise removed. This "activated sludge" is maintained in the reactor by returning to the reactor at least a portion of the sludge recovered from the underflow of the clarifier. The separation and recirculation of the activated sludge to the reactor for further aeration with the waste water results in the continuous purification of the waste water and causes the treated liquid output from the overflow of the clarifier to be substantially purified.

Activated sludge treatment plants have as indicated been constructed and have been found to function more or less successfully. However, certain design criteria have been established in the operation of these plants and must be incorporated in any design for efficient operation. It has been found, for example, that the rate of flow of the waste water in the reactor must be maintained at a

3.

minimum of 0.8 to 1.0 feet per second in order to prevent the sludge from settling in, and thereby obstructing, the reactor. It has also been established that it takes from 8 to 12 minutes for the bacteria and other micro-organisms to use up substantially all the dissolved oxygen in the waste water. Energy efficiency considerations, therefore, require that the waste water be subjected to aeration no more often than approximately once every 8 to 12 minutes.

BACKGROUND ART

Most activated sludge treatment processes which have been disclosed produce a treated liquid output which contains an undesirably high level of nitrate contamination. In my U.S. Patent No. 3,900,394, the entire disclosure of which is herein incorporated by reference, I have disclosed an improved and more efficient continuous activated sludge sewage treatment process comprising, in continuous manner, injecting raw sewage liquid into a reactor providing a single horizontal closed loop path, circulating the liquid around said path at a speed of at least about 0.8 feet per second and sufficient to avoid substantial settling of sludge suspended therein, aerating the liquid in the said path to promote aerobic decomposition of the sewage and formation of nitrate compounds in the said liquid, circulating the aerated liquid around the said path for a first distance in which the said decomposition proceeds until the liquid is substantially devoid of oxygen

4.

at the point of raw sewage injection, circulating the liquid containing nitrate compounds and raw sewage around the said path for a second distance in which denitrification proceeds in the said liquid until it reaches the next point of aeration in the said path, continuously removing treated liquid, for clarification and settling of sludge therein, at a rate approximating the rate of injection of the raw sewage liquid, discharging the resulting clarified liquid effluent and returning at least a portion of the settled sludge to the liquid in said reservoir, the average retention time of the liquid in the reservoir being at least about 24 hours, said second distance being at least about 10% of the sum of said first and second distances.

The need for relatively large land areas dictated by the two-fold criteria of a rate of flow of at least 0.8 to 1.0 feet per second and an interval 8 to 12 minutes between aerations resulting in a minimum path length for the reactor of at least 480 feet between aerations is a disadvantage for many locations where land is not available or is at a premium. In my United States Patent Application Serial No. 734,315 filed October 20, 1976, the entire disclosure of which is hereby incorporated by reference, I have disclosed and claimed a system which requires relatively smaller land areas, said system including a continuous waste water treatment system comprising a reactor providing a single, closed, continuous, substantially horizontal path

5.

through at least two adjacent substantially concentric loops, each of said loops having a beginning and an end, said reactor being provided with waste water inlet means, treated liquid outlet means, and aeration and circulation means, and wherein the said treated liquid outlet means is connected to clarifying means which removes at least some of the sludge carried by the treated liquid and sludge return means is provided to return at least some of the removed sludge to the said reactor.

U.S. Patent No. 3,510,110 discloses means whereby a surface aerator may be used in an activated sludge closed circuit waste water treatment system, according to which the oxygen required for the aeration is added by means of a surface aerator rotating about a vertical axis in mandatory association with a partition situated in the vicinity of the said surface aerator and substantially closing off the said circuit on one side of the said surface aerator. However, I have found that the juxtaposition of the rotating aerator with the partition, required to close off the said circuit on one side of the said surface aerator, results in excessive turbulence at the situs where the circulating liquid impacts on the partition. This turbulence destroys many flocs, the existence and growth of which are an essential part of the activated sludge process as described above. Furthermore, the propulsion force for moving the liquid in the circuit is not efficient since the horizontal force from the aerator means into the
second channel is partly counteracted by its
horizontal force into the first channel and by the
interfering juxtaposed partition.

It is an object of this invention to provide a
system which will avoid one or more of the above
disadvantages.

Another object of the invention is the
provision of such a system comprising aeration and
circulation means which avoid or substantially
reduce the amount of floc destruction referred to
above. Yet another object of the invention is the
provision of improved and/or more efficient aerating
and circulating means for use in a horizontally
disposed flowing liquid system, when a high degree
of aeration is required together with a strong
propulsion force to move the liquid horizontally at
the required speed in the circuit as for example in
activated sludge waste water treatment systems, and
especially in such systems as mentioned above where
long distances are required between points of
aeration in the circuit and where the circuit path
is often curved.

DISCLOSURE OF THE INVENTION

The attainment of one or more of the above
objects is made possible by this invention which
includes, in a horizontally disposed flowing liquid
system in which the liquid changes flow direction
from a first channel through a communication
section into a second channel, means for

7.

simultaneously aerating and circulating the said
liquid comprising substantially vertical partition
means cooperating with surface aerator means, the
said partition means extending from the inside wall
of the said first channel into the said communication section and the said surface aerator means
rotating about a substantially vertical axis on the
second channel side of the said partition means, the
said axis of the said surface aerator means being
separated from the said partition means at the
closest point by a distance corresponding to about
1.5 to 2 radii of the said surface aerator means and
an outer edge of the said partition means extending
past the said closest point no more than a distance
corresponding to about 1 said radius, the said axis
being separated from the outside wall of the said
communication section by a distance corresponding to
more than 2 said radii, whereby the said separator
means is closer to the said partition means than to
the said outside wall.

BEST MODE OF CARRYING OUT THE INVENTION

The invention may be put into practice in
various ways and a number of specific embodiments
embodiments will be described to illustrate the
invention with reference to the accompanying
drawings, in which:

Figure 1 is a plan view of one preferred
embodiment of the invention;

Figure 2 is a sectional view taken along the
line 2-2 of the embodiment of Figure 1;

Figures 3, 4 and 5 are plan views of other embodiments comprising configurations of aerator and partition means alternative to that shown in Figure 1;

Figure 6 is a partial plan view of still another embodiment comprising a configuration of aerator and partition means alternative to that shown in Figure 1; and

Figure 7 is a sectional view taken along the line 7-7 of Figure 6.

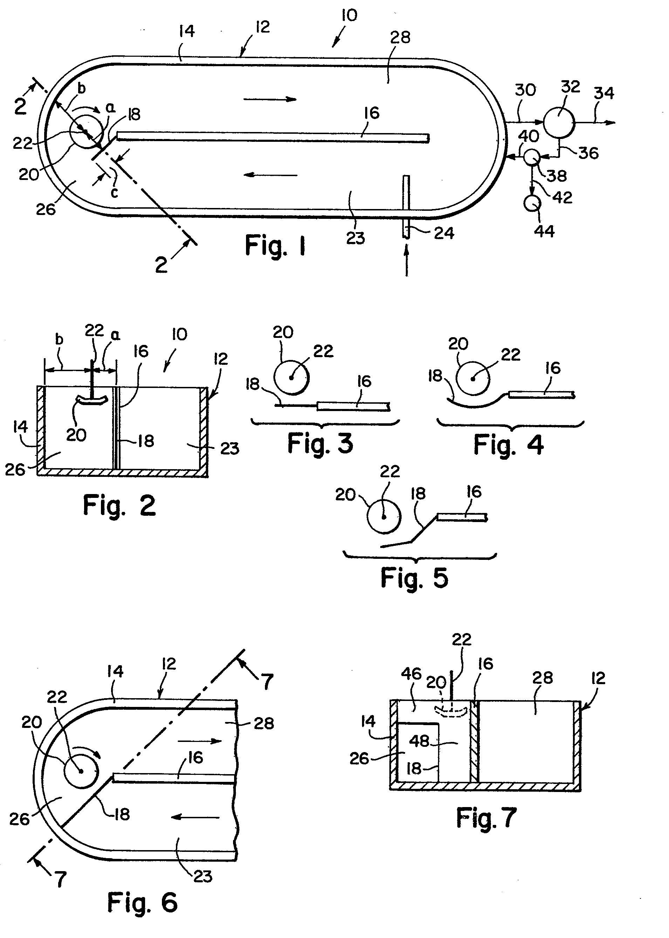

Referring now to Figures 1 and 2, reference numeral 10 indicates generally an apparatus embodying my invention comprising a reservoir or reactor 12 which includes an outside wall 14, an inside wall 16, partition means 18 and surface aerator means 20 with a substantially vertical axis or shaft means 22. Waste water to be treated enters a first channel 23 in the reactor 12 through inlet means 24 and flows past the partition means 18 into a communication section 26 wherein the surface aerator means 20 co-operating with the partition means 18 simultaneously aerates and by a unique centrifugal pumping action, impels the waste water into a second channel 28. Outlet means 30 for the treated liquid, such as an overflow pipe, is provided which removes treated liquid to a clarifying means 32 in the form of a settling tank. The clarifying means 32 is provided with an outlet pipe 34 for removing purified water (effluent) from the system, and a sludge pipe 36 which leads to a sludge pump 38 which is connected by a sludge return pipe 40 back to the reactor 12 and by a pipe 42 to an excess sludge tank 44.

The surface aerator means 20, which may be of known configuration, is positioned in the communication section 26 in such manner that the axis 22 is separated from the partition means 18 by a distance "a" corresponding to about 1.5 to 2 radii of the said surface aerator means 20. The dimensions of the communication section 26 and the diameter of the surface aerator means 20 are so selected that the axis 22 is separated from the oustide wall of the said communication section 26 by a distance "b" corresponding to more than 2 radii of the said surface aerator means 20. Further, the dimensions of the partition means 18, the diameter of the surface aerator means 20, and the positioning of the axis 22 are selected in such manner that the partition means 18 extends beyond its closest point to the axis 22 by a distance "c" corresponding to no more than one radius of the surface aerator means 20. These requirements determine that the tips of the impeller blades of the surface aerator means 20 are separated from the partition means 18, at their closest approach, by a distance corresponding to about 0.5 to 1 radius of the surface aerator means 20 while remaining separated from the outside all of the communication section 26 by a distance corresponding to more than 1.5 times said radii. Also, the partition means 18 extends past the point of closest approach of the said blade tips by no more than 1 said radius, or alternatively stated, the partition means 18 does not extend beyond the tips of the blades of the surface aerator means 20.

The dimensions, relative positions, and structures described in the preceding paragraph have been found to be critical and essential for achieving objects of this invention by enabling a relative reduction in the degree of floc-destroying turbulence, a relative increase in the efficiency of the propulsion forces necessary to move the liquid in the circuit, and/or a relative increase in the efficiency of aeration of the liquid in the circuit. Aeration is accomplished by the rotation of surface aerator means 20 impelling the upper layer of liquid centrifugally and tangentially away from the aerator which causes a mixing with the air above. The liquid flows downwardly at the outside wall 14 and the partition means 18 and returns to the aerator from below. According to this invention, and particularly by reason of the tangential and space relationship between the surface aerator means and the partition means, the liquid is caused and permitted to circulate around the aerator many times with minimal turbulence, thereby minimizing floc-destruction and increasing the centrifugal forces thus enabling an increase in the efficiency of the propulsion forces ncessary to move the liquid in the circuit. Typically, the surface aerator means has four impeller blades which rotate at a tip speed of at least 15 times the speed of flow of the liquid in the reservoir, but not at so high a speed as would cause destruction of the flocs.

The impeller blades of the surface aerator can, where desirable, be made with adjustable parts so that the diameter (within the prescribed dimensions) and/or the vertical width of the impeller blades can be changed, whereby at any time the optimum relation between aeration, propulsion force and minimum floc destruction can be obtained. The adjustment can be made by relocating bolts in extra bolt holes or through other means that provide a reliable connection.

According to another feature of this invention, a further relative reduction in the degree of floc-destroying turbulence, a further relative increase in the efficiency of said propulsion forces, and/or a further relative increase in the efficiency of aeration may be obtained by tilting the shaft means of the surface aerator means from the vertical so that the plane in which the aerator impeller means rotates is non-horizontal. For the attainment of optimum results it is preferred that the aforementioned tilt be such that said plane slopes up and away from the said partition means at an angle of up to 10° from the horizontal, preferably from 2° to 4°.

It will be noted that in the embodiment shown in Figures 1 and 2 the partition means 18 is uniplanar and extends from inside wall 16 at an angle in the direction of the outer wall 14 of the first channel 23 whereby the flow of the liquid in the reservoir is deflected laterally while simultaneously being accelerated due to the narrowing of the channel 23 at the entrance to the communication section 26. This deflection and increase in speed of the flow of liquid aids the desired novel centrifugal pumping action of the surface aerator means while still further reducing destructive turbulence. As described above, the surface aerator means 20 impels the upper layer of liquid centrifugally and tangentially away therefrom. This action causes the liquid at the surface to move with a generally clockwise and outward motion, assuming the various motions are in the directions indicated by the arrows in Figure 1. The generally clockwise direction of flow is maintained when the liquid reaches the outside wall 14 and the partition means 18, but the outward component of the motion is changed to a downward direction. When the clockwise and downwardly flowing liquid reaches the bottom of the communication section 26 the downward component of motion changes to an inward motion and then to an upward motion under surface aerator means 20. Careful consideration of Figure 1 in view of the above description of the motion of the liquid clearly illustrates the manner in which the relative positioning of the surface aerator means and the partition means of my invention functions to reduce destructive turbulence. It is apparent that the directions of liquid flow on both sides of partition means 18 are parallel so that minimum turbulence is created when the two flows merge at the end of the partition means 18. Further, the narrowing of the channel 23 at the entrance to the communication section 26 increases the rate of flow of liquid in that portion of the reservoir 12 and thereby decreases the difference in rate of flow between the two flows, which also acts to reduce destructive turbulence. Still further, the lateral deflection of the incoming flow toward the outside wall 14 causes the flow to follow the surface of the outside wall 14 (which is curved as shown but which may instead be composed of a plurality of segmented substantially vertical planar sections) in the communication section 26 and thereby merge with the flow around the surface aerator means 20 at a relatively greater distance from the surface aerator means 20 where the rate of flow is slower, which acts to reduce turbulence even further. This reduction in turbulence allows the liquid to carry more energy from the surface aerator means in the form of rotational motion than would be possible in the presence of increased energy wasting turbulence, and this increase in energy in the form of rotational motion increases the centrifugal pumping action of the surface aerator means 20. An additional benefit of my invention becomes apparent when it is noted that the spacing of the surface aerator means 20 from the partition means 18 allows a greater quantity of liquid to participate in the rotational motion than would be possible if the partition means 18 substantially closed off one side of the circuit for flowing liquid. Again, this increased quantity of flowing liquid increases the pumping action of my invention over certain known arrangements.

Figure 3 illustrates another embodiment of the invention comprising a configuration of the surface aerator means 20 and the partition means 18 alternative to the arrangement shown in Figures 1 and 2. In this embodiment the partition means 18 comprises an extension of the inside wall 16 in the same plane, and may in fact be integral therewith, thereby being obviously advantageous economically. However, this embodiment does not involve the narrowing of the channel 23 at the entrance to the communication section 26 and the resulting increased rate of flow of the liquid creating a venturi effect in the embodiment of Figures 1 and 2.

Figure 4 illustrates still another embodiment of this invention in which the partition means 18 is arcuate, and preferably curves first in the direction of the outer wall 14 and then in the direction of the inner wall 16 (or back towards the surface aerator means 20). The arcuate partition means 18 in this embodiment achieves an even greater reduction in turbulence over the uniplanar partition means of the embodiment of Figures 1 and 2 since the curved surfaces direct the flow of liquid even more

15.

smoothly, but at the cost of increased difficulty and expense of construction.

Figure 5 illustrates yet another embodiment of my invention comprising a configuration of the surface aerator means 20 and the partition means 18 alternative to the arrangements shown in Figures 1 to 4. The partition means 18, in this embodiment, comprises planar segments lying in at least two different planes, preferably with the first segment defining a greater angle with the inside wall 16 than the angle defined by the second segment and the inside wall 16. This embodiment represents an intermediate arrangement between the uniplanar partition means of Figures 1 and 2 and the arcuate partition means of Figure 4, and is also intermediate in both the discussed advantages and disadvantages.

Figures 6 and 7 illustrate a further embodiment of my invention wherein the partition means 18 comprises a separation wall consisting of wall means 46 extending in width completely across the first channel 23 from the inside wall 16 to the outside wall 14 and in height from above the level of liquid in the reservoir 12 to at least below the level of the surface aerator means 20, and wall means 48 extending in height from the wall means 46 to the bottom of the reservoir 12 and in width from the inside wall 16 only as far as the partition means 18 extends in the embodiment of Figures 1 and 2. In this manner, the partition means 18 in this embodiment not only directs the flow of liquid around the surface aerator means 20 (in the same fashion as the partition means 18 of the embodiments of Figures 1 to 5) but also restricts and simultaneously directs the passage of liquid only below the level of the surface aerator means 20, which compels the flow from the first channel 23 to merge at an increased speed with the flow below and around the surface aerator means 20 where that flow is relatively slower and thereby acts to reduce turbulence and sludge sedimentation and increase pumping and aerating efficiency. The wall means 46 and 48, which comprise partition means 18 in this embodiment, may be integral with each other, if desired, and are potentially structurally stronger than the partition means 18 of Figures 1 to 5 since they are supported at both ends.

INDUSTRIAL APPLICABILITY

The invention is applicable to an improved form of activated sludge sewage treatment plant but is also more generally applicable to liquid systems in which aeration and circulation are required.

0065047

17.

CLAIMS

1. A horizontally disposed flowing liquid system in which the liquid changes flow direction from a first channel through a communication section into a second channel, means for simultaneously aerating and circulating the said liquid comprising substantially vertical partition means cooperating with surface aerator means, the said partition means extending from the inside wall of the said first channel into the said communication section and the said surface aerator means rotating about a substantially vertical axis on the second channel side of the said partition means, the said axis of the said surface aerator means being separated from the said partition means at the closest point by a distance corresponding to about 1.5 to 2 radii of the said surface aerator means and an outer edge of the said partition means extending past the said closest point no more than a distance corresponding to about 1 said radius, the said axis being separated from the closest point on the outside wall of the said communication section by a distance corresponding to more than 2 said radii, whereby the said aerator means is closer to the said partition means than to the said outside wall.

. 2. A system as claimed in Claim 1 in which the said liquid is waste water to be treated and wherein

18.

the said first channel, the said second channel, and the said communication section comprise a reservoir for the said waste water, the said reservoir being provided with inlet means for waste water and outlet means for treated liquid.

3. A system as claimed in Claim 2 in the form of an activated sludge continuous waste water treatment system wherein the said outlet means for treated liquid is connected to clarifying means which removes at least some of the sludge carried by the treated liquid and sludge return means is provided to return to at least some of the removed sludge to the said reservoir.

4. A system as claimed in Claim 3 in which the said waste water inlet means is located in the said reservoir such that the distance between the said inlet means and the said surface aerator means in the flow direction is at least 10% of the complete distance around the said reservoir.

5. A system as claimed in Claim 2, 3 or 4 in which the said reservoir provides a single, closed, continuous, substantially horizontal path.

6. A system as claimed in any one of Claims 1 to 5 in which the said partition means extends at an angle in the direction of the outer wall of the said first channel whereby the flow of the said liquid is deflected laterally.

7.  A system as claimed in any one of Claims 1 to 6 in which the said partition means is substantially uniplanar.

8.  A system as claimed in Claim 7 in which the said partition means comprises a separation wall provided with an opening therein permitting passage of the said liquid from the said first channel into the said communication section only below the level of the said surface aerator means.

9.  A system as claimed in any one of Claims 1 to 6 in which the said partition means is arcuate.

10.  A system as claimed in Claim 9 in which the said partition means curves first in the direction of the said outer wall and then curves in the direction of the said inner wall.

11.  A system as claimed in any one of Claims 1 to 6 in which the said partition means comprises segments lying in at least two different planes.

12.  A system as claimed in any one of Claims 1 to 11 in which the said surface aerator means comprises aerator impeller means mounted perpendicularly on rotatable shaft means, the said shaft means being coaxial with the said axis and tilted so that the plane in which the said impeller means rotates is non-horizontal.

13. A system as claimed in Claim 12 in which the said plane slopes up and away from the said partition means at an angle of up to 10° from the horizontal.

0065047

1/1

Fig. 1

Fig. 2

Fig. 3

Fig. 4

Fig. 5

Fig. 6

Fig. 7

| Category | Citation of document with indication, where appropriate, of relevant passages | Relevant to claim | CLASSIFICATION OF THE APPLICATION (Int. Cl. 3) |
|---|---|---|---|
| D | US - A - 3 900 394 (ACTIVOX)  * column 2, line 58 - column 3, line 65; figure 2 *  --- | 1-7 | C 02 F 3/12  3/16 |
| D/A | US - A - 4 146 478 (ACTIVOX) | | |
| D/A | US - A - 3 510 110 (DWARS, HEEDERIK & VERHEY) | | |
| A | US - A - 4 062 911 (LANDINDUSTRIE SNEEK) | | TECHNICAL FIELDS SEARCHED (Int.Cl. 3) |
| A | DE - A - 2 706 078 (BASF) | | C 02 F 3/12  3/16 |
| A | DE - A - 2 751 845 (B. BOHNKE et al.) | | |
| A | US - A - 3 620 512 (PASSAVANT)  ------- | | |

**DOCUMENTS CONSIDERED TO BE RELEVANT**

CATEGORY OF CITED DOCUMENTS

X: particularly relevant if taken alone
Y: particularly relevant if combined with another document of the same category
A: technoiogical background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 06-02-1982 | TEPLY |

EPO Form 1503.1  06.78